# EUROPÄISCHE PATENTANMELDUNG

(11) **EP 1 970 192 A2**
(43) Veröffentlichungstag der Anmeldung: **17.09.2008**
(21) Anmeldenummer: 08003299.8
(22) Anmeldetag: 22.02.2008
(51) Int. Cl.: B30B 7/02

(54) **Etagenpresse für Formteile**

(30) Priorität: 15.03.2007 DE 102007012496
(71) Anmelder: IAC Group GmbH, 85560 Ebersberg (DE)
(72) Erfinder: Meindl, Wolfgang, 85570 Markt Schwaben (DE)
(74) Vertreter: Liesegang, Eva

(57) **Zusammenfassung**

Etagenpresse insbesondere Heizpresse zum Aufheizen von Formteilen bzw. Formteil-Rohlingen mit einer unteren Presseneinheit (10), die von einem Pressentisch (48) getragen ist, und einer oberen Presseneinheit (12), die mit einem Pressenstempel (50) gekoppelt ist, sowie wenigstens einer mittleren Presseneinheit (14) und mit Mitteln (34,36) zum mechanischen Verriegeln der mittleren Presseneinheit (14) mit der unteren Presseneinheit (10) und Mitteln (34,38) zum mechanischen Verriegeln der mittleren Presseneinheit (14) mit der oberen Presseneinheit (12) derart, daß die mittlere Presseneinheit (14) wahlweise mit der unteren und der oberen Presseneinheit (10,12) oder mit nur der unteren (10) oder nur der oberen Presseneinheit (12) verriegelbar ist.

## Beschreibung

Die Erfindung betrifft eine Etagenpresse und spezieller eine beheizte Etagenpresse zum Aufheizen von Formteil-Rohlingen vor deren Verformung in einer nachgeschalteten Formpresse.

Die Erfindung basiert auf einem bekannten Verfahren zum Herstellen kaschierter oder unkaschierter Formteile, z.B. aus Fasermatten oder Faserplatten, bei dem das Ausgangsmaterial, d.h. z.B. die Fasermatte, in einer Heizpresse aufgeheizt und anschließend in einer Formpresse in eine gewünschte Form gepreßt und abgekühlt wird. Solche Formteile kommen beispielsweise als Innenverkleidungen für Kraftfahrzeuge zum Einsatz. Mehretagenpressen zum gleichzeitigen Herstellen mehrerer Formteile sind im Stand der Technik bekannt und beispielsweise beschrieben in der EP 0 503 800 B1, der EP 1 645 383 A2, der DE 297 10 555 U1, der DE 297 01 263 U1, der EP 1 371 476 A1, der DE-PS 504 354, der DE-PS 1 082 728, der DE-PS 1 812 177, der DE-PS 197 18 557, der DE 88 06 883 U1, der DE 89 02 360 U1 und der US-A 1 939 014.

Diese Schriften beschreiben beheizte und/oder gekühlte Mehretagenpressen, in denen Formteile beispielsweise aus Faservliesmatten mit thermoplastischen Bindemitteln, wie Polypropylen, geformt werden, wobei mehrere solche Matten gleichzeitig verarbeitet werden können. Für das formende Verarbeiten von Fasermatten und -platten ist es notwendig, die Materialien vor dem Verformen auf eine vorgegebene Verarbeitungstemperatur zu bringen. Hierzu ist es im Stand der Technik bekannt, der eigentlichen Formpresse eine Heizpresse mit Kontaktheizplatten vorzuschalten. Die Kontaktheizplatten bilden eine Oberheizung und eine Unterheizung, welche eine vorgewählte Temperatur haben. Die Fasermatten werden zwischen die Ober- und Unterheizung eingebracht. Im Stand der Technik ist es auch bekannt, solche Heizpressen mit mehreren beheizten Etagen vorzusehen, wie beispielsweise in der DE 1 801 411 U beschrieben.

Um also das Ausgangsmaterial für die Formteile zu erwärmen, wird es zwischen die Kontaktheizplatten gelegt, anschließend wird die Heizpresse geschlossen, und das Material wird unter einem bestimmten Druck aufgeheizt. Damit das Material über seinen gesamten Querschnitt eine vorgegebene Temperatur erreicht, müssen die Kontaktheizplatten während einer bestimmten Zeit geschlossen bleiben, z.B. 60 Sekunden Heizzeit, bevor das aufgeheizte Material entnommen und in einem darauffolgenden Arbeitsgang in einer Formpresse gepreßt werden kann. Dabei ist in der Regel die Zeit, die zum Verformen und Abkühlen der Formteile notwendig ist (z.B. 30 Sekunden Preßzeit), deutlich geringer als die Heizzeit. Häufig ist also die Heizzeit der längste Arbeitsschritt beim Herstellen von Formteilen, so daß die Heizzeit den Gesamtzyklus, oder die Taktzeit, der Verarbeitung bestimmt.

Um eine Verkürzung der Taktzeit für die Herstellung von Formteilen zu erreichen, wäre es möglich, das Ausgangsmaterial nacheinander zwei Heizstationen durchlaufen zu lassen oder zwei parallele Heizpressen vorzusehen. In der ersten Variante würde das Ausgangsmaterial zunächst in einer Heizpresse vorgeheizt, beispielsweise mit einer Vorheizzeit von 30 Sekunden und anschließend in einer zweiten Heizpresse fertig aufgeheizt, beispielsweise mit einer Nachheizzeit von 30 Sekunden, und schließlich in der Formpresse geformt und abgekühlt, beispielsweise mit einer Preßzeit von ebenfalls 30 Sekunden.

Nimmt man für Verfahrbewegungen der Verarbeitungsanlage, insbesondere das Öffnen und Schließen der Pressen, das Einlegen und Entnehmen der Formteile und den Transport der Formteile von einer Presse zur nächsten, etwa 20 Sekunden an, so würde sich bei einer so modifizierten Anlage die Zykluszeit von etwa 80 Sekunden auf etwa 50 Sekunden verringern. Das gleiche Ergebnis würde man erzielen, wenn parallel zwei Heizpressen vorgesehen würden und abwechselnd aus der einen und der anderen Heizpresse aufgeheiztes Material entnommen würde.

Mit dieser Maßnahme kann somit die Taktzeit für die Herstellung von Formteilen deutlich reduziert werden; sie erfordert jedoch einen großen technischen und finanziellen Aufwand, weil eine zusätzliche Heizpresse vorgesehen werden muß. Auch der Aufwand für die Handhabung der Fasermatten, die Maschinensteuerung, der Platzbedarf und damit einhergehende Faktoren erhöht sich.

Es ist daher eine Aufgabe der Erfindung, eine Etagenpresse, insbesondere eine beheizte Etagenpresse zum Aufheizen von Formteil-Rohlingen, anzugeben, mit der die Taktzeit für das Aufheizen von Formteil-Rohlingen mit möglichst geringem Aufwand verringert werden kann. Diese Aufgabe wird durch eine Etagenpresse mit den Merkmalen von Patentanspruch 1 gelöst.

Die Erfindung sieht eine Etagenpresse, insbesondere eine Heizpresse zum Aufheizen von Formteil-Rohlingen vor, mit einer unteren Presseneinheit, die von einem Pressentisch getragen ist, und einer oberen Presseneinheit, die mit einem Pressenstempel gekoppelt ist. Zwischen der oberen und der unteren Presseneinheit ist eine mittlere Presseneinheit angeordnet, die mit der oberen und der unteren Presseneinheit koppelbar ist. Hierzu sind Mittel zum mechanischen Verriegeln der mittleren Presseneinheit mit der unteren Presseneinheit und Mittel zum mechanischen Verriegeln der mittleren Presseneinheit mit der oberen Presseneinheit derart vorgesehen, daß die mittlere Presseneinheit zu jeweils einem Zeitpunkt wahlweise mit der unteren und der oberen Presseneinheit oder mit nur der unteren Presseneinheit oder nur der oberen Presseneinheit verriegelt werden kann. Vorzugsweise weist jede Presseneinheit eine Heizeinrichtung auf.

Die Erfindung sieht somit eine Etagenpresse, insbesondere eine Heizpresse vor, in der gleichzeitig mehrere Formteil-Rohlinge gepreßt und gegebenenfalls erwärmt werden können, wobei diese Formteil-Rohlinge vorzugsweise abwechselnd aus dem unteren bzw. oberen Pressensystem entnommen werden, um anschließend weiterverarbeitet zu werden. Kern der Etagenpresse ist die mittlere Presseneinheit, die mit der oberen Presseneinheit und der unteren Presseneinheit verriegelt werden kann. Dadurch ist es möglich, die mittlere Presseneinheit ohne feste mechanische und elektrische Verbindung zur oberen Presseneinheit und zur unteren Presseneinheit anzuordnen. Sind beispielsweise der Pressentisch und der Pressenstempel, welche die obere und die untere Presseneinheit tragen, über einen Rahmen miteinander verbunden, so muß die mittlere Presseneinheit nicht mit diesem Rahmen verbunden werden. Dadurch bietet die erfindungsgemäße Etagenpresse einen maximalen Freiraum zum Zu- und Abführen der Formteil-Rohlinge oder anderer zu verarbeitender Materialien.

Die mittlere Presseneinheit wird in der Praxis jeweils abwechselnd mit der unteren Presseneinheit und der oberen Presseneinheit mechanisch verriegelt, wobei diese Verriegelung geschlossen bleibt, bis die vorgegebene Heizzeit erreicht ist. Zur Entnahme und Neubeschickung des oberen Pressensystems bzw. unteren Pressensystems wird die entsprechende Verriegelung geöffnet, während die Verriegelung des anderen Pressensystems geschlossen bleibt. Dabei wird die mittlere Presseneinheit entweder mit der oberen Presseneinheit nach oben bewegt, oder sie bleibt auf der unteren Presseneinheit liegen, während der Pressenstempel die obere Presseneinheit nach oben anhebt.

In einer bevorzugten Ausführung der Erfindung umfassen die Mittel zum mechanischen Verriegeln der Presseneinheiten Bajonett-Verriegelungen.

Wie bereits erwähnt, ist die erfindungsgemäße Etagenpresse in der bevorzugten Ausführung eine Heizpresse, wobei jede Presseneinheit eine Heizeinrichtung umfaßt. In der bevorzugten Ausführung sind Mittel zum elektrischen Koppeln der Heizeinrichtung der mittleren Presseneinheit mit der unteren Presseneinheit und Mittel zum elektrischen Koppeln der Heizeinrichtung der mittleren Presseneinheit mit der oberen Presseneinheit derart vorgesehen, daß die Heizeinrichtung der mittleren Presseneinheit wahlweise von der unteren oder der oberen Presseneinheit mit elektrischer Energie versorgt wird. Hierzu können Steckverbinder vorgesehen sein, über welche die mittlere Presseneinheit ohne Unterbrechung abwechselnd von der unteren und der oberen Presseneinheit mit Strom versorgt werden kann. Durch eine entsprechende Ansteuerung wird vorgesehen, daß die Stromversorgung immer über das geschlossene Pressensystem erfolgt und daß vor dem Öffnen eines Pressensystems die entsprechende elektrische Verbindung stromlos geschaltet wird.

Bei der erfindungsgemäßen Etagenpresse benötigt somit die mittlere Presseneinheit keine permanente mechanische oder elektrische Ankopplung an den Rest der Etagenpresse, sondern sie wird wahlweise an die obere Presseneinheit oder die untere Presseneinheit angekoppelt.

Die Erfindung ist nicht auf das Vorsehen einer mittleren Presseneinheit beschränkt, sondern kann je nach Bedarf mehrere mittlere Presseneinheiten aufweisen. Die Erfindung ist auch anwendbar auf unbeheizte Formpressen.

In der bevorzugten Ausführung der Erfindung umfaßt jede Presseneinheit einen Pressenblock, in den die Heizeinrichtung integriert ist. Diese Pressenblöcke weisen im wesentlichen ebene Heizplatten auf, die mit den Formteil-Rohlingen in Kontakt gebracht werden. Die mittlere Presseneinheit 14 kann nach Bedarf mehrere Heizkreise aufweisen. Sie kann z.B. die Unterheizung der oberen Heizetage und die Oberheizung der unteren Heizetage bilden. Die obere Heizetage kann somit als ein eigener Heizkreis ausgebildet werden, der wiederum aus einzelnen ansteuerbaren und regelbaren Heizelementen besteht. Ebenso kann die untere Heizetage als eigener Heizkreis ausgebildet werden, der aus einzelnen ansteuerbaren und regelbaren Heizelementen besteht. Vorzugsweise sind Steckverbinder für die Stromversorgung und für die Temperaturfühler zur Regelung der Heizelemente der mittleren Presseneinheit 14 sowie zusätzliche Sensoren für die Positionsabfrage der mittleren Presseneinheit 14 zweifach vorhanden, nämlich einmal zur Verbindung mit der oberen Pressenheit 12 (obere Heizetage) und einmal zur Verbindung mit der unteren Presseneinheit 10 (untere Heizetage). Die erforderlichen Steuer- und Versorgungsleitungen werden über die obere bzw. die untere Presseneinheit an eine Steuereinrichtung geführt und jeweils abwechselnd abhängig davon angesteuert, ob die obere Heizetage oder die untere Heizetage geschlossen bleibt.

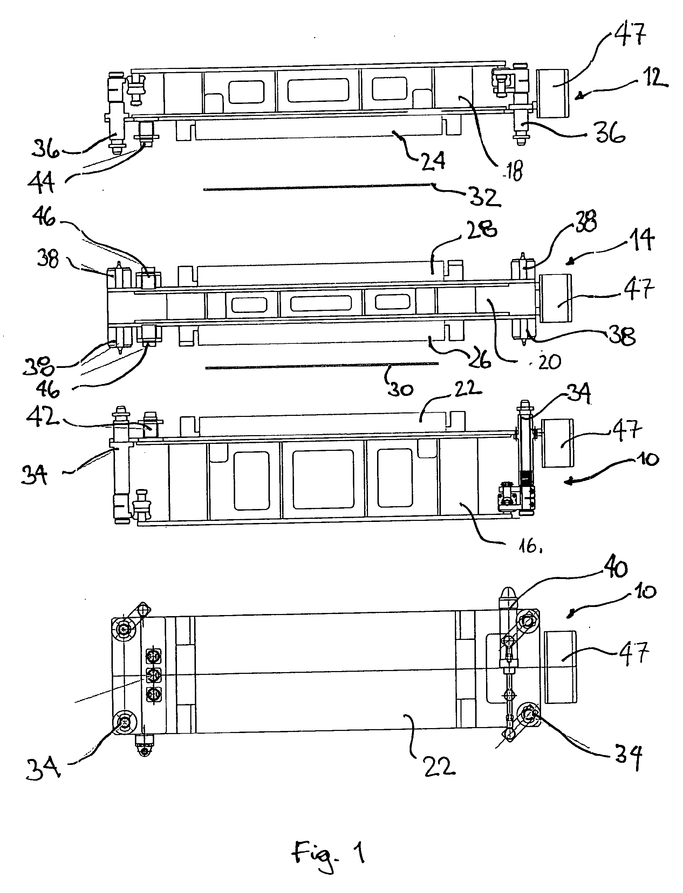

In Fig. 1 sind am seitlichen Rand der Heizetagen 10, 12, 14 jeweils Klemmkästen 47 dargestellt, in welchen die Anschlüsse für die Steckverbinder, die Heizelemente, Kabel und Thermofühler sowie alle weiteren notwendigen Steuerleitungen angeschlossen sind.

Zusätzlich zu den genannten Fühlern kann erfaßt werden, ob die untere bzw. die obere Heizetage verriegelt ist oder nicht, ob sich die mittlere Heizetage in einer Endlage befindet, etc.

Die mittlere Presseneinheit wird somit elektrisch und hinsichtlich ihrer Steuersignale über die obere oder die untere Presseneinheit versorgt. Auch mechanisch ist sie nur über die obere oder die untere Presseneinheit gelagert.

In der bevorzugten Anwendung der Erfindung werden die Formteil-Rohlinge in der Etagenpresse nicht tatsächlich verformt, sondern im flachen Zustand vorgeheizt. Hierbei erfolgt immer auch eine gewisse Druckeinwirkung und Verdichtung der Formteil-Rohlinge, wie in an sich bekannten Heizpressen.

Die Erfindung schlägt auch ein Verfahren zum Herstellen eines Formteils mit einer Etagenpresse der oben beschriebenen Art vor. In dem erfindungsgemäßen Verfahren bilden die untere Presseneinheit und die mittlere Presseneinheit gemeinsam eine untere Heizetage (oder unteres Pressensystem) und die obere Presseneinheit und die mittlere Presseneinheit bilden gemeinsam eine obere Heizetage (oder oberes Pressensystem).

Als Ausgangsstellung für das erfindungsgemäße Verfahren sei angenommen,
- daß die untere Heizetage geöffnet ist und sich eine aufgeheizte Fasermatte (Formteil-Rohling) darin befindet.
- Die obere Heizetage ist geschlossen und verriegelt und enthält eine weitere Fasermatte (Formteil-Rohling), die gerade erhitzt wird.
- Eine nachgeschaltete Formpresse ist geöffnet und enthält kein Formteil.

Ausgehend von dieser Situation, wird
- aus der unteren Heizetage die aufgeheizte Fasermatte entnommen und zu der nachgeschalteten Formpresse geführt,
- während der unteren Heizetage eine neue Fasermatte zugeführt wird.
- Die Formpresse wird geschlossen, und
- auch die untere Heizetage wird geschlossen und verriegelt.
- Wenn die Heizzeit der oberen Heizetage erreicht ist, wird deren Verriegelung gelöst,
- die Formpresse wird geöffnet und das gepreßte Formteil wird aus der Formpresse entnommen.
- Die obere Heizetage wird geöffnet, und
- die aufgeheizte Fasermatte wird aus der oberen Heizetage entnommen und der nachgeschalteten Formpresse zugeführt,
- während eine neue Fasermatte der oberen Heizetage zugeführt wird.
- Dann wird die Formpresse geschlossen, und
- die obere Heizetage wird geschlossen und verriegelt.
- Wenn die Heizzeit der unteren Heizetage erreicht ist, wird deren Verriegelung gelöst,
- die Formpresse wird geöffnet und das gepreßte Formteil wird aus der Formpresse entnommen.
- Die untere Heizetage wird geöffnet und
- die aufgeheizte Fasermatte wird aus der unteren Heizetage entnommen und der Formpresse zugeführt,
- während der unteren Heizetage ein neues Formteil zugeführt wird.

Dieser Zyklus wiederholt sich, bis sämtliche Fasermatten zu gepreßten Formteilen verarbeitet sind.

In einer praktischen Ausführung kann die Preßzeit in der Formpresse beispielsweise 30 Sekunden betragen, während die Aufheizzeit in der unteren oder oberen Heizetage etwa 60 Sekunden beträgt. Die Übergangszeit zum Entriegeln und Öffnen einer Heizetage sowie zum Entnehmen einer aufgeheizten Fasermatte, Transfer zur Formpresse und Nachführen einer neuen Fasermatte einschließlich nachfolgendes Schließen und Verriegeln einer Heizetage kann in der Praxis etwa 20 Sekunden betragen.

Die Formteil-Rohlinge (z.B. Fasermatten) werden vorzugsweise automatisch in die erfindungsgemäße Etagenpresse sowie die nachgeschaltete Formpresse geführt. Hierzu können seitliche Einspannvorrichtungen vorgesehen sein, welche die Formteil-Rohlinge an ihren zur Bewegungsrichtung durch die Etagenpresse und die Formpresse parallelen Seitenrändern halten. Da die Formteil-Rohlinge in der Praxis etwas größer sind als die Grundfläche der einzelnen Heizplatten, können diese Einspannvorrichtungen leicht seitlich an den Heizplatten vorbeigeführt werden. Da erfindungsgemäß die mittlere Presseneinheit variabel an der unteren oder der oberen Presseneinheit aufgehängt ist, wird die Einspannvorrichtung in keiner Weise durch irgendwelche Rahmenbauteile zur Halterung der mittleren Presseneinheit behindert.

Die Erfindung wird im folgenden anhand einer bevorzugten Ausführung mit Bezug auf die Zeichnungen näher erläutert. In den Figuren zeigen:
- Fig. 1: eine schematische Darstellung der Presseneinheiten der erfindungsgemäßen Etagenpresse;
- Fig. 2: eine schematische Darstellung der erfindungsgemäßen Etagenpresse;
- Fig. 3a, 3b, 3c: schematische Darstellungen der Presseneinheiten in verschiedenen Betriebsstellungen; und
- Fig. 4a und 4b: schematische Draufsichten auf eine Etage der Mehretagenpresse in verschiedenen Betriebsstellungen.

Fig. 1 zeigt in schematischer Darstellung die einzelnen Presseneinheiten der erfindungsgemäßen Heizetage in Seitenansicht sowie zusätzlich die untere Presseneinheit in Draufsicht. In Fig. 1 ist die untere Presseneinheit mit 10, die obere Presseneinheit mit 12 und die mittlere Presseneinheit mit 14 bezeichnet. Jede Presseneinheit umfaßt einen Pressenblock 16, 18, 20, in den eine Heizeinrichtung (nicht gezeigt) integriert ist. Der untere Pressenblock 16 weist eine erste ebene Heizplatte 22 auf seiner Oberseite auf, und der obere Pressenblock 20 weist eine zweite ebene Heizplatte 24 an seiner Unterseite auf. Der mittlere Pressenblock 18 weist an seiner Unterseite und seiner Oberseite eine dritte bzw. eine vierte ebene Heizplatte 26, 28 auf.

In Fig. 1 sind auch Fasermatten 30, 32 angedeutet, welche zwischen den Heizplatten 22 bis 28 gepreßt und erhitzt werden. Die Fasermatten 30, 32 sind stellvertretend für beliebige Formteil-Rohlinge, beispielsweise aus Natur- oder Kunstfasern, die mit der erfindungsgemäßen Etagenpresse gepreßt bzw. verdichtet und erwärmt werden können. Der hierbei aufgewendete Druck kann beispielsweise im Bereich von 100 - 400 · 10³ Pa und die Temperatur im Bereich von 100 - 300°C liegen. Diese Werte werden jedoch abhängig von dem Ausgangsmaterial, der gewünschten Aufheiztemperatur und dem gewünschten Verdichtungsgrad variieren.

Die einzelnen Presseneinheiten 10, 12, 14 sind in der in Fig. 1 gezeigten Ausführung mittels Bajonett-Verriegelungen 34, 36, 38 miteinander in Eingriff bringbar und verriegelbar. In der Draufsicht der unteren Presseneinheit 10, in Fig. 1 unten, ist eine Betätigungsvorrichtung 40 zum automatischen Betätigen der Bajonett-Verriegelungen angedeutet.

Die Presseneinheiten 10, 12, 14 verfügen in der gezeigten Ausführung ferner über elektrische Steckverbinder 42, 44, 46 zur elektrischen Kopplung der mittleren Presseneinheit 14 mit der oberen und der unteren Presseneinheit 10, 12. Die mittlere Presseneinheit 14 ist somit mechanisch und elektrisch über entweder die untere oder die obere Presseneinheit 10, 12 an die Etagenpresse angekoppelt. Die Heizplatten können aber auch eine leichte Kontur oder unterschiedliche Preßspalte aufweisen, z.B. zur Verformung oder stärkeren Verdichtung der Formteil-Rohlinge, wenn bei schwierig herzustellenden Konturen am Formteil mit unterschiedlichen Dehnungen innerhalb der Fasermatter (Formteil-Rohling) gearbeitet werden muß, damit z.B. in einem stärker verdichteten Bereich der Fasermatte weniger Dehnung vorhanden ist. Dadurch kann erreicht werden, daß die Fasermatte bei der Verformung in der nachgeschalteten Formpresse an dieser Stelle nicht zu stark gestreckt wird, um z.B. Falten oder Dünnstellen in dem zu pressenden Formteil entgegenzuwirken.

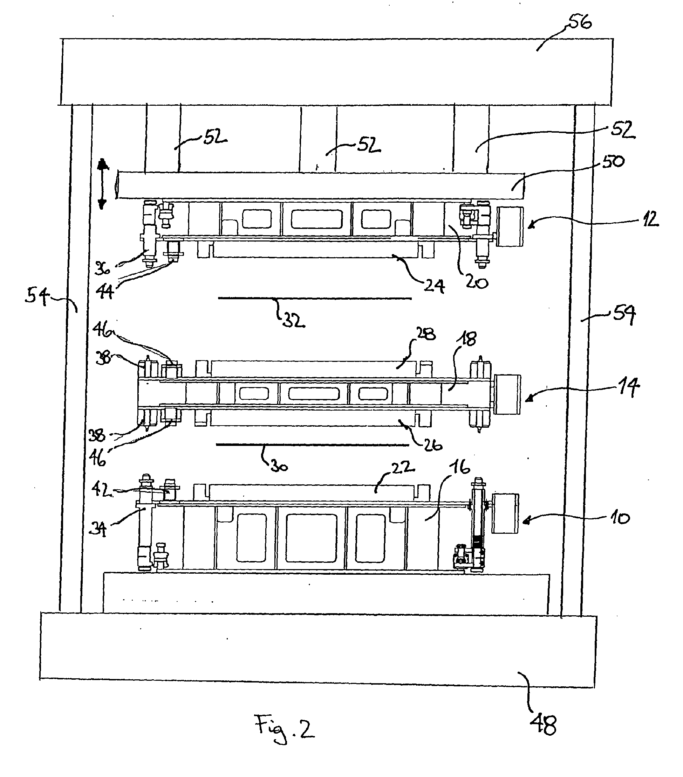

Fig. 2 zeigt schematisch die erfindungsgemäße Etagenpresse mit der unteren Presseneinheit 10, der oberen Presseneinheit 12 und der mittleren Presseneinheit 14. Die einzelnen Komponenten der Presseneinheit sind mit denselben Bezugszeichen wie in Fig. 1 bezeichnet und nicht nochmals beschrieben. In der in Fig. 2 gezeigten Ausführung ruht die untere Presseneinheit 10 auf einem Pressentisch 48, und die obere Presseneinheit 12 ist an einem Pressenstempel 50 angebracht. Der Pressenstempel 50 ist über Hydraulikzylinder 52 in vertikaler Richtung bewegbar, wie durch den Doppelpfeil angedeutet. Der Pressentisch 48 und der Pressenstempel 50 sind über eine Rahmenstruktur 54, 56 einer 4-Säulenpresse miteinander verbunden.

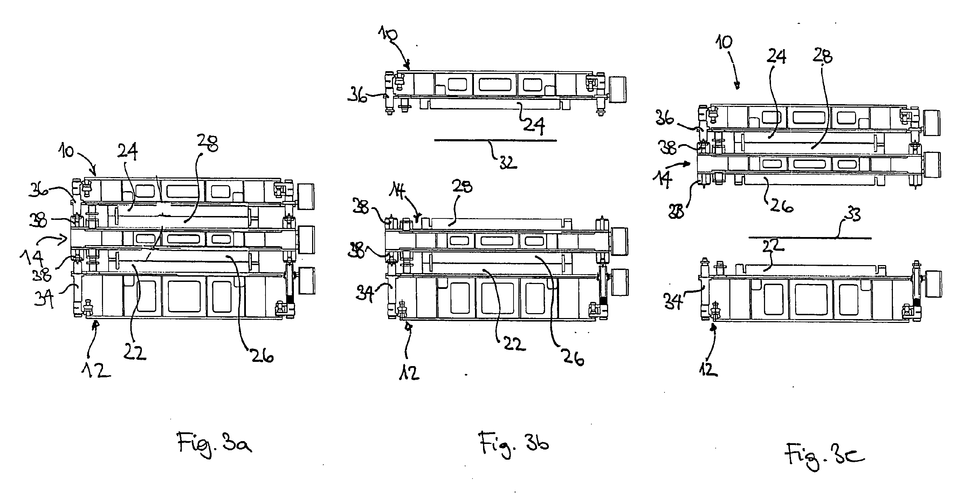

In der Praxis wird die mittlere Presseneinheit 14 nicht, wie in Fig. 2 gezeigt, quasi freischwebend zwischen der unteren Presseneinheit 10 und der oberen Presseneinheit 12 angeordnet sein, sondern sie wird immer wenigstens mit einer, der unteren oder der oberen Presseneinheit, gekoppelt sein. Diese Koppelung ist in den Fig. 3a und 3b gezeigt, wobei erfindungsgemäß die untere Presseneinheit 10 und die mittlere Presseneinheit 14 eine untere Heizetage bilden und die obere Presseneinheit 12 und die mittlere Presseneinheit 14 eine obere Heizetage bilden.

Das erfindungsgemäße Verfahren ist im folgenden anhand der Fig. 3a bis 3c mit weiteren Einzelheiten erläutert. Wie beschrieben, wird in der bevorzugten Ausführung der Erfindung die Etagenpresse zum Aufheizen von Formteil-Rohlingen verwendet, die nachfolgend in einer Formpresse verformt und abgekühlt werden. Das Aufheizen der Formteil-Rohlinge auf die notwendige Verformungstemperatur dauert in der Praxis länger als der anschließende Formungs- und Abkühlungsprozeß. Die Erfindung sieht daher eine Etagenpresse zum Aufheizen von Formteil-Rohlingen vor, die einer nachfolgenden Formpresse zugeführt werden sollen, welche es erlaubt, jeweils zwei oder mehr Formteil-Rohlinge gleichzeitig aufzuheizen und im Wechsel aus der Etagenpresse zu entnehmen. Zur Beschreibung des erfindungsgemäßen Verfahrens ist, wie oben erwähnt, die Kombination aus der unteren Presseneinheit und der mittleren Presseneinheit als untere Heizetage und die Kombination aus der oberen Presseneinheit und der mittleren Presseneinheit als obere Heizetage definiert.

Das erfindungsgemäße Verfahren sei ausgehend von einem Zeitpunkt betrachtet, zu dem beide Heizetagen geschlossen sind wie in Fig. 3a gezeigt. Das heißt, der Pressenstempel 50 (Fig. 2) ist nach unten gefahren und die obere und die untere Heizetage der Etagenpresse und ihre Bajonett-Verriegelungen 34, 36, 38 sind geschlossen. Die Heizeinrichtung der mittleren Presseneinheit 14 wird über die untere oder die obere Presseneinheit 10, 12 mit Strom versorgt. Zwischen den Heizplatten 22, 26 und 24, 28 befindet sich jeweils ein Formteil-Rohling, beispielsweise eine Fasermatte, das in der unteren bzw. oberen Heizetage verdichtet und aufgeheizt wird. Es sei weiter angenommen, daß die Heizzeit für jede Fasermatte etwa 60 Sekunden beträgt, während die Zeit zum Verpressen und Abkühlen des Formteils in einer nachgeschalteten Formpresse (nicht gezeigt) etwa 30 Sekunden beträgt.

In einem ersten Verfahrensschritt ist die Formpresse (nicht gezeigt) geöffnet und enthält kein Formteil. Die obere Heizetage wird entriegelt und geöffnet und enthält eine aufgeheizte Fasermatte 32. Die untere Heizetage ist verriegelt, und die mittlere Presseneinheit 14 wird über die untere Presseneinheit 10 und die zugehörigen Steckverbinder mit Strom versorgt, während die Steckverbinder zwischen der oberen und der mittleren Presseneinheit 12, 14 stromlos geschaltet sind; siehe Fig. 3b.

Die aufgeheizte Fasermatte 32 wird aus der oberen Heizetage entnommen und in die Formpresse (nicht gezeigt) gelegt, während gleichzeitig eine neue, kalte Fasermatte in die obere Heizetage eingelegt wird. Die Formpresse wird geschlossen und während einer Preßzeit von etwa 30 Sekunden geschlossen gehalten. Die obere Heizetage wird geschlossen und die obere Presseneinheit 12 und die mittlere Presseneinheit 14 werden miteinander verriegelt, wobei wieder der Zustand der Fig. 3a eingenommen wird. Es beginnt eine Heizzeit von beispielsweise 60 Sekunden für die Fasermatte 32 in der oberen Heizetage.

In einem nächsten Schritt wird die Verriegelung der unteren Heizetage, also zwischen der unteren Presseneinheit 10 und der mittleren Presseneinheit 14 gelöst. Nachdem die Preßzeit von 30 Sekunden verstrichen ist, wird die Formpresse geöffnet und das Formteil entnommen. Ist nun auch die Heizzeit für die Fasermatte in der unteren Heizetage beendet, wird die untere Heizetage geöffnet, indem die mittlere Presseneinheit 14 zusammen mit der oberen Presseneinheit 12 vertikal nach oben bewegt wird, wie in Fig. 3c angedeutet. Dann kann die aufgeheizte Fasermatte 33 aus der unteren Heizetage entnommen und in die Formpresse gebracht werden, während gleichzeitig eine neue, kalte Fasermatte in die untere Heizetage eingebracht wird.

Die Formpresse wird geschlossen, und es beginnt ein neuer Preßzyklus von 30 Sekunden, wobei auch die untere Heizetage wieder geschlossen wird, indem die obere Presseneinheit 12 gemeinsam mit der mittleren Presseneinheit 14 mittels des Pressenstempels 50 auf die untere Presseneinheit 10 abgesenkt wird, so daß sich wieder der Betriebszustand der Fig. 3a ergibt. Es beginnt die Heizzeit von etwa 60 Sekunden für die Fasermatte in der unteren Heizetage.

In einem nächsten Schritt wird die Verriegelung für die obere Heizetage gelöst, und nach dem Ende der Formzeit wird die Formpresse geöffnet und das verpreßte Formteil entnommen.

Wenn auch die Heizzeit für die Fasermatte in der oberen Heizetage beendet ist, wird die obere Heizetage wieder geöffnet, siehe Fig. 3b, und der Arbeitszyklus wiederholt sich, wie oben beschrieben.

Bei dem erfindungsgemäßen Verfahren werden somit abwechselnd mit Hilfe des Pressenstempels 50 die obere und die untere Heizetage geöffnet und geschlossen, wobei zum Verriegeln der Presseneinheiten 10, 12, 14, diese jeweils in die Stellung der Fig. 3a zusammengebracht werden, zum Öffnen der oberen Heizetage nur die obere Presseneinheit 12 angehoben wird, wie in Fig. 3b gezeigt, während die untere und die mittlere Presseneinheit verriegelt bleiben, und zum Öffnen der unteren Heizetage die obere und die mittlere Presseneinheit verriegelt bleiben und gemeinsam angehoben werden. Dabei wird durch eine entsprechende Ansteuerung der Presseneinheiten 10, 12, 14 sichergestellt, daß die elektrischen Steckverbinder 42, 44, 46 der jeweils geöffneten Heizetagen stromlos geschaltet sind.

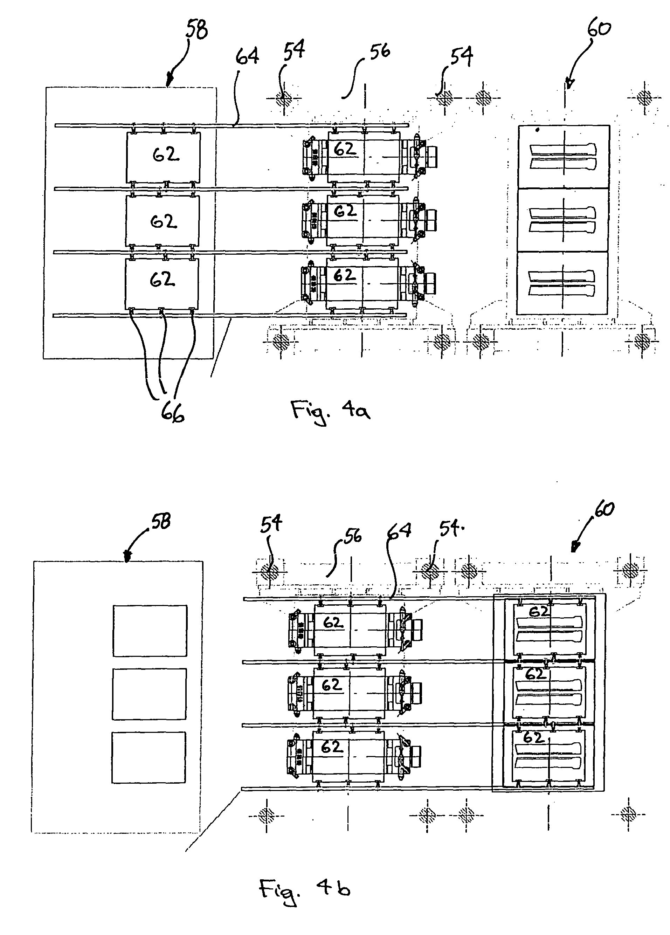

Die Fig. 4a und 4b zeigen nochmals schematisch den Ablauf des erfindungsgemäßen Verfahrens in einer anderen Ansicht. Die erfindungsgemäße Etagenpresse ist dabei jeweils in der Mitte der Figur dargestellt, wobei auf der linken Seite der Figur ein Palettenmagazin 58 für Fasermatten angedeutet ist und auf der rechten Seite der Figur eine Formpresse 60. In der in den Fig. 4a und 4b gezeigten Ausführung sind das Palettenmagazin 58, die Etagenpresse und die Formpresse 60 jeweils so ausgelegt, daß parallel drei Fasermatten oder andere Rohlinge 62 zu Formteilen verarbeitet werden können. Die Fasermatten 62 werden von einem Beschickungsrahmen 64 transportiert, der Einspannvorrichtungen, z.B. Greifzangen 66, aufweist, mit denen die Fasermatten an ihren Seitenrändern gegriffen und von dem Palettenmagazin 58 zur Etagenpresse und von der Etagenpresse zur Formpresse 60 transportiert werden.

Wie in den Fig. 4a und 4b gezeigt, wird jeweils ein Satz Fasermatten 62 in dem Beschickungsrahmen 64 gehalten, so daß die Be- und Entladeschritte der Heizetage und der Formpresse jeweils synchron erfolgen. Fig. 4a zeigt, wie ein Satz Fasermatten 62 aus dem Palettenmagazin 60 sowie ein weiterer Satz Fasermatten 62 aus der Etagenpresse mit Hilfe des Beschickungsrahmens 64 entnommen werden kann, wobei diese Fasermatten dann der Etagenpresse bzw. der Formpresse 60 zugeführt werden, wie in Fig. 4b gezeigt.

In der Praxis können die Fasermatten nach dem Aufheizen aufgrund des aufgeschmolzenen Kunststoffs, der in den Fasermatten enthalten ist, möglicherweise klebrig sein. Da die Fasermatten aber größer sind als die Heizplatten der Pressenblöcke, verbleibt ein überstehender Rand der aufgeheizten Fasermatten, der kühler und nicht klebrig ist und somit transportiert werden kann, ohne daß die Greifzangen verkleben.

Zusätzlich kann vorgesehen sein, daß über die Heizplatten Teflonfolien gespannt sind, um zu verhindern, daß die Heizplatten mit den Fasermatten verkleben, und um so das Ablösen der aufgeheizten Fasermatten von den Heizplatten zu erleichtern.

Es ist auch möglich, die Greifzangen für die Fasermatten mit Pneumatikzylindern auszurüsten, um nach dem Ablösen der aufgeheizten Fasermatten und vor deren Transfer zur Formpresse die unterschiedlich durchhängenden Fasermatten zu strecken.

In den Figuren ist die Rahmenstruktur 54, 56 einer 4-Säulenpresse angedeutet, welche die untere Presseneinheit 10 und die obere Presseneinheit 12 miteinander verbindet. Da die mittlere Presseneinheit 12 mit dieser Rahmenstruktur nicht verbunden ist, sondern jeweils abwechselnd an die untere und die obere Presseneinheit 10, 12 angekoppelt wird, sind an der mittleren Presseneinheit 14 keinerlei Halterungen, Träger oder dergleichen angebracht, welche das Be- und Entladen der Fasermatten 62 behindern könnten.

Die in der vorstehenden Beschreibung, den Ansprüchen und den Figuren offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 10: untere Presseneinheit
- 12: obere Presseneinheit
- 14: mittlere Presseneinheit
- 16, 18, 20: Pressenblock
- 22: erste ebene Heizplatte
- 24: zweite ebene Heizplatte
- 26, 28: dritte und vierte ebene Heizplatte
- 30,32: Fasermatten
- 34, 36, 38: Bajonett-Verriegelungen
- 40: Betätigungsvorrichtung
- 42, 44, 46: elektrische Steckverbinder
- 47: Klemmkasten
- 48: Pressentisch
- 50: Pressenstempel
- 52: Hydraulikzylinder
- 54, 56: Rahmenstruktur
- 58: Palettenmagazin
- 60: Formpresse
- 62: Fasermatten
- 64: Beschickungsrahmen
- 66: Greifzangen

## Patentansprüche

1. Etagenpresse insbesondere Heizpresse zum Aufheizen von Formteil-Rohlingen mit einer unteren Presseneinheit (10), die von einem Pressentisch (48) getragen ist, und einer oberen Presseneinheit (12), die mit einem Pressenstempel (50) gekoppelt ist, sowie
wenigstens einer mittleren Presseneinheit (14) und mit
Mitteln (34, 36) zum mechanischen Verriegeln der mittleren Presseneinheit (14) mit der unteren Presseneinheit (10) und Mitteln (34, 38) zum mechanischen VerriegeIn der mittleren Presseneinheit (14) mit der oberen Presseneinheit (12) derart, daß die mittlere Presseneinheit (14) wahlweise mit der unteren und der oberen Presseneinheit (10, 12) verriegelbar ist, wobei die mittlere Presseneinheit (14) keine permanente mechanische Verbindung zu der unteren Presseneinheit (10) und der oberen Presseneinheit (12) aufweist.

2. Etagenpresse nach Anspruch 1, **dadurch gekennzeichnet, daß** die Mittel zum mechanischen Verriegeln Bajonett-Verriegelungen (34, 36, 38) umfassen.

3. Etagenpresse nach Anspruch 1 oder 2, **dadurch gekennzeichnet, daß** der Pressentisch (48) und der Pressenstempel (50) über einen Rahmen bzw. ein Säulengestell miteinander verbunden sind, mit dem die mittlere Presseneinheit (14) nicht verbunden ist.

4. Etagenpresse nach einem der vorangehenden Ansprüche, **dadurch gekennzeichnet, daß** jede der Presseneinheiten (10, 12, 14) eine Heizeinrichtung umfaßt.

5. Etagenpresse nach Anspruch 4, **gekennzeichnet durch** Mittel (42, 46) zum elektrischen Koppeln der Heizeinrichtung der mittleren Presseneinheit (14) mit der unteren Presseneinheit (10) und Mitteln (44, 46) zum elektrischen Koppeln der Heizeinrichtung der mittleren Presseneinheit (14) mit der oberen Presseneinheit (12) derart, daß die Heizeinrichtung der mittleren Presseneinheit wahlweise mit der unteren oder der oberen Presseneinheit koppelbar ist.

6. Etagenpresse nach Anspruch 5, **dadurch gekennzeichnet, daß** die Mittel zum elektrischen Koppeln Steckverbinder (42, 44, 46) umfassen.

7. Etagenpresse nach einem der Ansprüche 4 bis 6, **dadurch gekennzeichnet, daß** jede der Presseneinheiten (10, 12, 14) einen Pressenblock umfaßt, in den die Heizeinrichtung integriert ist.

8. Etagenpresse nach Anspruch 7, **dadurch gekennzeichnet, daß** die Pressenblöcke im wesentlichen ebene Heizplatten (22 - 28) aufweisen.

9. Verwendung der Etagenpresse nach einem der Ansprüche 4 bis 8 zum Herstellen eines Formteils , wobei die untere Presseneinheit (10) und die mittlere Presseneinheit (14) gemeinsam eine untere Heizetage bilden und die obere Presseneinheit (12) und die mittlere Presseneinheit (14) gemeinsam eine obere Heizetage bilden, mit folgenden Verfahrensschritten
(a) Öffnen der unteren Heizetage und Entnehmen eines aufgeheizten Formteil-Rohlings aus der unteren Heizetage, während die obere Heizetage geschlossen ist und ein weiteres Formteil erhitzt;
(b) Zuführen des aufgeheizten Formteil-Rohlings zu einer nachgeschalteten Formpresse (60) und Zuführen eines neuen Formteil-Rohlings in die untere Heizetage;
(c) Schließen der Formpresse;
(d) Schließen und VerriegeIn der unteren Heizetage;
(e) Lösen der Verriegelung der oberen Heizetage;
(f) Öffnen der Formpresse und Entnehmen des gepreßten Formteils aus der Formpresse;
(g) Öffnen der oberen Heizetage und Entnehmen des aufgeheizten Formteil-Rohlings aus der oberen Heizetage, während die untere Heizetage geschlossen bleibt;
(h) Zuführen des aufgeheizten Formteil-Rohlings zu der nachgeschalteten Formpresse und Zuführen eines neuen Formteil-Rohlings in die obere Heizetage;
(i) Schließen der Formpresse;
(j) Schließen und VerriegeIn der oberen Heizetage;
(k) Lösen der Verriegelung der unteren Heizetage;
(l) Öffnen der Formpresse und Entnehmen des gepreßten Formteils aus der Formpresse;
(m)Öffnen der unteren Heizetage und Entnehmen des aufgeheizten Formteil-Rohlings aus der unteren Heizetage, während die obere Heizetage geschlossen bleibt;
(n) zurück zu Schritt (b).

10. Verfahren nach Anspruch 9, **dadurch gekennzeichnet, daß** die Aufheizzeit für die Formteil-Rohlinge in der Etagenpresse etwa doppelt so lang ist wie die Preßzeit für die Formteile in der Formpresse.

11. Verfahren nach Anspruch 8 oder 9, **dadurch gekennzeichnet, daß** die Formteil-Rohlinge mittels seitlicher Einspannvorrichtungen an ihren zur Bewegungsrichtung durch die Etagenpresse und die Formpresse parallelen Seitenrändern gehalten werden.

12. Verfahren nach Anspruch 11, **dadurch gekennzeichnet, daß** die Grundfläche der Formteil-Rohlinge größer ist als die Grundfläche der einzelnen Presseneinheiten.

13. Verfahren nach einem der Ansprüche 9 bis 12, **dadurch gekennzeichnet, daß** die Formteil-Rohlinge Fasermatten zum Herstellen von Innenverkleidungen für Kraftfahrzeuge sind.
